# FASCICULE DE BREVET EUROPEEN

(11) **EP 1 409 428 B1**
(45) Date de publication et mention de la délivrance du brevet: **02.11.2006**
(21) Numéro de dépôt: 02770055.8
(22) Date de dépôt: 24.07.2002
(51) Int. Cl.: C03C 25/42

(54) **FIBRE MINERALE MUNIE D'UN REVETEMENT MESOPOREUX**
MIT EINER MESOPORÖSEN BESCHICHTUNG VERSEHENE MINERALFASER
MINERAL FIBRE PROVIDED WITH MESOPOROUS COATING

(30) Priorité: 25.07.2001 FR 0109902
(43) Date de publication de la demande: 21.04.2004
(73) Titulaire: Saint-Gobain Quartz S.A.S., 92400 Courbevoie (FR); Saint-Gobain Vetrotex France S.A., 73000 Chambéry (FR)
(72) Inventeur: MAQUIN, Bertrand, F-75015 Paris (FR); JACQUIOD, Catherine, F-91190 Gif Sur Yvette (FR); LEFEVRE, Didier, F-91940 Les Ulis (FR); MARCHAL, Arnaud, F-95440 Ecouen (FR); LARLUS, Olivier, F-68100 Mulhouse (FR)
(74) Mandataire: Cardin, Elise
(86) Numéro de dépôt international: PCT/FR2002/002644
(87) Numéro de publication internationale: WO 2003/010106

(56) Documents cités:
- EP-A- 1 044 935
- US-A- 5 834 114
- DATABASE WPI Section Ch, Week 200112 Derwent Publications Ltd., London, GB; Class E33, AN 2000-574086 XP002195252 & JP 2001 039740 A (TOKYO INST TECHNOLOGY) , 13 février 2001 (2001-02-13)

## Description

La présente invention concerne la création, sur des fibres minérales, de revêtements minéraux présentant des pores de dimensions sélectionnées dans le domaine de 2 à 50 nm ; dans la suite de la description le terme « microporeux » se réfère à des dimensions de pores de 0,2 à 2 nm et le terme « mésoporeux » à des dimensions de pores de 2 à 50 nm. Ces fibres à surface spécifique ainsi augmentée sont susceptibles de constituer d'excellents supports de catalyseurs ou éléments adsorbants, notamment dans le domaine du traitement ou de la filtration des effluents liquides ou gazeux.

Leur activité catalytique ou photocatalytique peut provenir de différentes formes modifiées de la silice mésoporeuse : insertion d'éléments de transition dans leur réseau de silice pour l'oxydation des oléfines, insertion d'aluminium en vue d'une catalyse acide pour le crackage d'hydrocarbures par exemple, inclusion de clusters métalliques de Ni, Mo, Pd, Ag, Cu ou Fe, ou de leurs oxydes, TiO₂ pour la photocatalyse.

Dans le domaine de la filtration des métaux lourds, la fonctionnalisation des sites de surface par des groupements thiol permet d'obtenir d'excellents rendements. Ces fibres peuvent également être utilisées pour décontaminer des effluents de composés comme les arsenates.

Peuvent également être cités comme exemples d'application des réactions de catalyse destinées à diminuer le taux d'imbrûlés (CO) mais aussi le taux des NOₓ et SOₓ dans la combustion du propane, le piégeage de poussières plus ou moins fines présentes dans un gaz, des réactions de catalyse se produisant à températures aussi élevées que 600 à 900°C notamment dans le domaine du traitement des gaz chauds industriels, la désodorisation dans des dispositifs de ventilation, chauffage, des salles blanches, des habitacles de véhicules de transport.

On connaît déjà, d'autre part, des matériaux en poudre ou granulés commercialisés par la société Mobil sous la dénomination M41 S, présentant des pores de dimensions supérieures à 1,5 nm (dimension maximale dans les zéolithes). Ces matériaux sont très recherchés dans le domaine de la catalyse. Leur très haute surface spécifique, la monodispersité des tailles de pore et la faible tortuosité de leur réseau poreux garantissent en effet respectivement une haute activité, une haute sélectivité et une diffusion rapide des espèces à l'intérieur des pores. La dimension relativement importante de leurs pores les rendent spécialement adaptés à la catalyse mettant en jeu des composés de grande taille.

La demande EP-1 044 935 A1 décrit la création de pores directement sur des fibres de verre par un procédé soustractif tel qu'une attaque acide ; le document WO-99/37705 A1 mentionne la filabilité de compositions en vue d'obtenir des fibres poreuses dans leur masse. Ces deux types de fibres relativement cassantes et friables, d'une cohésion perfectible, présentent des propriétés mécaniques limitées.

Le brevet US-5,834,114 décrit l'enduction de fibres de verre par une résine phénolique, le durcissement de celle-ci puis la création de pores dans le revêtement constitué par la résine, par carbonisation de celui-ci. Ce document ne précise pas de quelle manière le contrôle des paramètres de la carbonisation permet de régler plus ou moins la dimension des pores obtenus. De plus, étant donné la nature du revêtement poreux et son procédé d'obtention, on peut s'attendre à une tenue mécanique, notamment une résistance à l'abrasion insuffisantes pour les applications dans lesquelles les fibres ont le plus à subir un frottement, par exemple.

En conséquence, l'invention concerne des fibres à surface mésoporeuse pouvant être mises sous une forme à haute résistance mécanique, telle qu'un mat, un voile, un tissu, un feutre ou autre, dans lesquels les fibres sont associées le cas échéant à un liant. Elle a plus précisément pour but de mettre à disposition de tels produits de transformation de fibres dont la surface spécifique soit augmentée comme requis par les applications envisagées mentionnées précédemment, dont la haute résistance mécanique ainsi que la mésoporosité persistent sur de longues durées, même dans des conditions d'utilisation exigeantes de contraintes mécaniques, d'abrasion, de hautes températures, de corrosion, d'attaques chimiques diverses, et qui soient inertes vis-à-vis d'agents actifs, catalyseurs ou autres, susceptibles d'être insérés, voire greffés dans les pores.

A cette fin, l'invention a pour objet une fibre minérale munie d'un revêtement mésoporeux essentiellement minéral. Ainsi combine-ton les excellentes propriétés mécaniques inhérentes aux fibres minérales et la résistance mécanique et chimique procurée par le caractère essentiellement minéral du revêtement poreux, le fait que la fibre et son revêtement soient tous deux minéraux étant de plus de nature à favoriser l'adhésion du second sur la première. Il est aisément compréhensible que ces qualités seront idéalement mises à profit dans les applications dans lesquelles un flux gazeux ou liquide éventuellement chargé de particules solides de masses diverses entre en contact avec le matériau fibreux à une pression relativement importante.

Selon des modes de réalisation préférés, la fibre de l'invention est constituée d'un verre ou de silice.

Le revêtement mésoporeux est à base d'au moins un composé de l'un au moins des éléments : Si, W, Sb, Ti, Zr, Ta, V, B, Pb, Mg, Al, Mn, Co, Ni, Sn, Zn, In, Fe et Mo, le cas échéant en liaison covalente avec des éléments tels que O, S, N, C ou similaire.

L'invention a d'autre part pour objet un produit comprenant des fibres telles que décrites précédemment et éventuellement un constituant organique du type d'un liant, de surface spécifique au moins égale à 10 m²/g, notamment au moins égale à 30 m²/g. Les surfaces spécifiques sont extraites de mesures d'isothermes d'adsorption de N₂ à la température de l'azote liquide et calculées selon le modèle BET. De manière la plus adéquate, ce produit se trouve sous la forme d'un mat, d'un voile, d'un feutre, d'une laine, de fibres coupées, d'un fil continu notamment enroulé, ou d'un tissu.

Un autre objet de l'invention réside dans un procédé de création d'un revêtement mésoporeux sur des fibres en vue d'obtenir un produit comme décrit ci-dessus. Ce procédé comprend :
- la mise en contact des fibres avec une composition de groupes assembleurs organiques et d'au moins un précurseur du matériau constituant le revêtement mésoporeux,
- la polymérisation ou la précipitation et la croissance des molécules du précurseur autour des groupes assembleurs organiques, puis
- l'élimination des groupes assembleurs organiques.

Selon un mode de réalisation intéressant et représenté par l'exemple 4 ci-dessous, on met en oeuvre successivement une température de nucléation (naissance des cristaux) de 90 à 150°C, puis une température de croissance cristalline de 150 à 190°C.

D'autres objets de l'invention sont les applications de la fibre revêtue en catalyse, photocatalyse, dans la filtration et le traitement de gaz ou de liquides, ainsi que son utilisation à haute température, c'est-à-dire jusqu'à 900°C au moins, applications et utilisation mentionnées en détails dans la partie introductive de cette demande. En particulier, la résistance remarquable de la fibre de l'invention à température élevée doit être soulignée.

L'invention est illustrée par la description suivante d'exemples de réalisation.

### EXEMPLE 1

On soumet un voile de fibres de verre au traitement décrit ci-dessous. Ce voile peut être défini par une teneur pondérale de 3% d'amidon, un diamètre moyen des fibres de 12 µm, une surface spécifique inférieure à 0,2 m²/g et la composition des fibres suivante, exprimée en pourcentages pondéraux :
- SiO₂ :66,02
- Al₂O₃ :3,4
- CaO :7
- MgO :2,95
- Na₂O :15,85
- K₂O : 0,7
- B₂O₃ :4,5
- TiO₂ : 0,17
- Fe₂O₃ : 0,17
- SO₃ :0,25.

Une bande du voile, de 40 cm de largeur est revêtue d'une solution par pulvérisation ou immersion, en continu. La solution contient, pour 1 mole de Si(OC₂H₅)₄ -tétraéthoxysilane, TEOS en abrégé-, 10 moles d'eau à pH 2 (ajusté par HCl), 40 moles d'éthanol à 96% et x moles d'un copolymère blocs polyoxyéthylène-polyoxypropylène, commercialisé par la société BASF sous la marque enregistrée Pluronic PE 6200.

Après cette pulvérisation ou immersion, le voile passe dans une étuve à 200°C sur ligne pendant 10 minutes.

Le voile est ensuite soumis à un traitement thermique comprenant :
- une montée en température de l'ambiante à 175°C à une vitesse de 350°C/h,
- un palier de 2 heures à 175°C,
- une montée de 175 à 400°C à raison de 50°C/h,
- et un maintien à 400°C pendant 12 heures.

Ce traitement thermique est destiné à éliminer les groupes assembleurs organiques constitués par le copolymère blocs et autour desquels s'est effectuée la polymérisation du TEOS précurseur de silice. Cette élimination laisse place à un réseau poreux.

Le traitement thermique a pour autre effet d'éliminer l'amidon présent initialement dans le voile.

On évalue le pourcentage pondéral de revêtement déposé par rapport au poids initial de voile diminué du poids initial d'amidon, la surface spécifique du voile (selon la méthode décrite précédemment) ainsi traité ainsi que le diamètre moyen des pores, selon la méthode des isothermes de désorption selon le modèle BJH. Les résultats sont consignés dans les tableaux ci-dessous, dans lesquels x désigne le nombre de moles de copolymère blocs présentes dans la solution de traitement pour une mole de TEOS.

**TABLEAU 1 (immersion)**

| x | 0,123 | 0,171 | 0,245 |
|---|---|---|---|
| % de revêtement | 10,6 | 10,4 | 11,2 |
| Surface spécifique (m²/g) | 38 | 45 | 37 |
| Diamètre de pores (nm) | 3,6 | 3,2 | 3,2 |

**TABLEAU 2 (pulvérisation)**

| x | 0,016 | 0,049 |
|---|---|---|
| % de revêtement | 4,9 | 11,7 |
| Surface spécifique (m²/g) | 48 | 48 |
| Diamètre de pores (nm) | 2 | 3 à 4 |

### EXEMPLE 2

On traite un échantillon de feutre de silice de 2 m x 0,4 m, de moins de 0,3 m²/g de surface spécifique, par la solution décrite dans l'exemple précédent dans laquelle x est égal à 0,082.

L'échantillon, entraîné par une bande de convoyage à une vitesse de 30 m/h, est soumis successivement à une immersion dans la solution, à une succion à travers la bande par dépression de 150 mm d'eau pour un premier échantillon, respectivement plus de 220 mm d'eau pour un deuxième échantillon puis à un passage en étuve à 230°C destiné à évaporer les solvants.

On calcine ensuite l'échantillon selon le même cycle thermique que décrit à l'exemple 1 afin d'éliminer les groupes assembleurs organiques pour former le réseau poreux comme expliqué ci-dessus.

On mesure la prise de masse des échantillons avant et après calcination ; les résultats sont consignés dans le Tableau 3 ci-dessous.

**TABLEAU 3 (prise de masse en %)**

| | Premier échantillon | Deuxième échantillon |
|---|---|---|
| Avant calcination | 13 | 16 |
| Après calcination | 7 | 14 |

On évalue la surface spécifique par la même méthode que précédemment : 86 m²/g et 87 m²/g pour le premier, respectivement le deuxième échantillon. Dans le même ordre, les rayons de pores médians sont de 6,7 respectivement 6,8 nm. La répartition des surfaces spécifiques en fonction des rayons de pores est consignée dans le tableau ci-dessous. A% y désigne la proportion de surface spécifique associée au domaine de rayons de pores indiqué.

**TABLEAU 4 (répartition des surfaces spécifiques en fonction des rayons de pores)**

| De (nm) | A (nm) | Premier échantillon A% | Deuxième échantillon A% |
|---|---|---|---|
| 0 | 1,5 | 5,7 | 3,6 |
| 1,5 | 3 | 54,0 | 41,7 |
| 3 | 5 | 29,4 | 36,4 |
| 5 | 10 | 8,4 | 14,3 |
| 10 | 50 | 1,6 | 2,0 |

### EXEMPLE 3 (comparatif)

On traite un voile de fibres textiles de 15 µm de diamètre, de verre de composition suivante, exprimée en pourcentages pondéraux :
- Si O₂ : 55,8
- Al₂O₃ : 13
- CaO : 23
- MgO : 0,3
- Na₂O :0,5
- K₂O : 0,3
- B₂O₃ :6,2
- TiO₂ : 0,11
- Fe₂O₃ : 0,12
- SO₃ :0,57.

Ce voile est en outre caractérisé par une surface spécifique inférieure à 0,2 m²/g.

On prépare une composition, appelée gel E, et comprenant en moles :
- 5 TPAOH (hydroxyde de tétra-n-propylammonium) ;
- 25 SiO₂;
- 420 H₂O.

Pour ce faire, on mélange 10,015 g d'un mélange de 30% en masse de silice et 70% en masse d'eau commercialisé par la société Aldrich sous la marque enregistrée Ludox HS-30 et 10,169 g de TPAOH à 20% en masse dans l'eau.

Il est ensuite immergé dans une quantité de gel E défini ci-dessus telle que sa masse est 6 fois supérieure à celle des fibres et maintenu à 170°C pendant 6 heures 30 minutes.

L'élimination des groupes assembleurs organiques provenant de TPAOH est effectuée ici par calcination flash : introduction et maintien du voile pendant 2 heures dans un four préalablement chauffé à 480°C.

On mesure la surface spécifique de la manière précisée ci-dessus et l'on obtient une valeur de 140 m²/g. La quasi-totalité des pores formés dans la silice est dans le domaine de tailles (diamètres) de pores de 3 à 8 Å, dimensions caractérisant une zéolithe.

On isole une fibre d'au moins 2 cm de longueur du voile avant et après formation de son revêtement poreux et l'on en évalue la Résistance à Traction Unitaire, c'est-à-dire qu'on colle une extrémité de chaque fibre et on mesure la force de traction nécessaire pour la rompre. Cela permet de déterminer sur deux ensembles de fibres, avant et après traitement, une rémanence mécanique moyenne de 25 %, définissant un pourcentage de maintien des propriétés mécaniques.

### EXEMPLE 4 (comparatif)

On traite un voile de fibres de verre de même surface spécifique et de même composition qu'à l'exemple 3.

On prépare deux solutions de compositions molaires suivantes :
- gel H (4 TPAOH : 25 SiO₂: 420 H₂O); et
- gel I (3 TPAOH : 25 SiO₂ : 420 H₂O)
comme indiqué à l'exemple 3 pour le gel E.

Les compositions et les fibres sont mises en contact dans un rapport massique composition/fibres égal à 6, dans un premier temps à une température relativement basse (130°C) de nucléation, c'est-à-dire naissance des cristaux, puis dans un deuxième temps à température plus élevée (170°C) à laquelle a lieu la cristallisation proprement dite, c'est-à-dire la croissance des cristaux.

Ces opérations sont suivies, comme dans les exemples précédents, d'une élimination des groupes assembleurs organiques provenant de TPAOH, par le traitement thermique suivant : passage de la température ambiante à 200°C en 30 min, palier à 200°C pendant 1 heure, montée à 500°C en 2 heures et maintien à cette température pendant 3 heures, puis refroidissement à la température ambiante par inertie.

On évalue la surface spécifique de la manière précisée ci-dessus, et le pourcentage en poids de revêtement formé par diffraction de rayons X par des étalons revêtement poreux/fibres d'une part, par les fibres traitées selon l'exemple d'autre part, calcul de l'aire des pics avec soustraction de la ligne de base. Les résultats sont consignés dans le tableau ci-dessous.

**TABLEAU 5**

| Gel | H | I | I | I | I |
|---|---|---|---|---|---|
| Nucléation | 4h-130°C | 4h-130°C | 3h-130°C | 4h-130°C | 3h-130°C |
| Cristallisation | 3h-150°C | 3h-150°C | 1h-170°C | 1h-170°C | 2h-170°C |
| Epaisseur MEB | 1,1 µm | 3 µm | 1 µm | 2,7 µm | 2,5 µm |
| Surface spécifique (m²/g) | 35 | 107 | 30 | 93 | 84 |
| Etat des fibres | très bon | moyen | bon | moyen | moyen |
| % en poids de revêtement | 8,8-10 | 26,8-30,6 | 7,5-8,6 | 23,3-26,6 | 21-24 |

Les diamètres de pores sont compris dans leur quasi-totalité entre 3 et 8 Å comme dans l'exemple 3. On constate que la mise en oeuvre d'une température de nucléation et d'une température de cristallisation comme décrit précédemment permet de diminuer la durée de formation du revêtement et d'accroître l'adhésion du revêtement poreux sur la fibre. Des surfaces spécifiques élevées sont atteintes.

Les rémanences mécaniques telles que définies dans l'exemple 3 sont d'au moins 25% ce qui permet d'envisager une application comme zéolithe dans les conditions de contraintes mécaniques les plus exigeantes.

## Revendications

1. Fibre minérale munie d'un revêtement mésoporeux à dimension de pores de 2 à 50 nm essentiellement minéral à base d'au moins un composé de l'un au moins des éléments : Si, W, Sb, Ti, Zr, Ta, V, B, Pb, Mg, Al, Mn, Co, Ni, Sn, Zn, In, Fe et Mo.

2. Fibre selon la revendication 1, constituée d'un verre ou de silice.

3. Produit comprenant des fibres selon l'une des revendications 1 à 2 et éventuellement un constituant organique tel qu'un liant, de surface spécifique au moins égale à 10 m²/g, notamment au moins égale à 30 m²/g.

4. Produit selon la revendication 3, sous forme d'un mat, d'un voile, d'un feutre, d'une laine, de fibres coupées, d'un fil continu notamment enroulé, ou d'un tissu.

5. Procédé de création d'un revêtement mésoporeux sur des fibres en vue d'obtenir un produit selon la revendication 3 ou 4, comprenant :
• la mise en contact des fibres avec une composition de groupes assembleurs organiques et d'au moins un précurseur du matériau constituant le revêtement mésoporeux,
• la polymérisation ou la précipitation et la croissance des molécules du précurseur autour des groupes assembleurs organiques, puis
• l'élimination des groupes assembleurs organiques.

6. Procédé selon la revendication 5, dans lequel sont mises en oeuvre successivement une température de nucléation de 90 à 150°C, puis une température de croissance cristalline dé 150 à 190°C.

7. Application d'une fibre selon la revendication 1, dans le réseau mésoporeux de laquelle sont insérés des éléments de transition, pour l'oxydation des oléfines.

8. Application d'une fibre selon la revendication 1, dans le réseau mésoporeux de laquelle est inséré Al, en catalyse acide, notamment pour le crackage d'hydrocarbures.

9. Application d'une fibre selon la revendication 1, dans le réseau mésoporeux de laquelle sont inclus des clusters métalliques de Ni, Mo, Pd, Ag, Cu ou Fe, ou de leurs oxydes, de TiO₂, en catalyse ou photocatalyse.

10. Application d'une fibre selon la revendication 1, dont les sites de surface sont fonctionnalisés par des groupements thiol, dans la filtration des métaux lourds ou la décontamination d'effluents d'arsenates ou similaires.

11. Application d'une fibre selon la revendication 1, dans des réactions de catalyse destinées à diminuer le taux d'imbrûlés CO et/ou le taux des NOₓ et SOₓ, notamment dans la combustion du propane.

12. Application d'une fibre selon la revendication 1, au piégeage de poussières dans un gaz.

13. Application d'une fibre selon la revendication 1, au traitement des gaz chauds industriels.

14. Application d'une fibre selon la revendication 1, à la désodorisation dans des dispositifs de ventilation, chauffage, des salles blanches, des habitacles de véhicules de transport ou autres enceintes.

15. Utilisation d'une fibre selon la revendication 1, à température élevée, notamment jusqu'à 900 °C.

## Claims

1. Mineral fibre provided with an essentially mineral microporous or mesoporous coating having a pore size ranging from 2 to 50 nm based on at least one compound of at least one of the elements: Si, W, Sb, Ti, Zr, Ta, V, B, Pb, Mg, Al, Mn, Co, Ni, Sn, Zn, In, Fe and Mo.

2. Fibre according to Claim 1, consisting of a glass or silica.

3. Product comprising fibres according to either of Claims 1 and 2 and optionally an organic constituent such as a binder, having a specific surface area at least equal to 10 m²/g, especially at least equal to 30 m²/g.

4. Process according to Claim 3, in the form of a mat, a web, a felt, a wool, chopped fibres, a continuous, especially wound, yarn, or a woven.

5. Process for creating a mesoporous coating on fibres for the purpose of obtaining a product according to Claim 3 or 4, comprising:
• bringing the fibres into contact with a composition of organic assembling groups and of at least one precursor of the material constituting the mesoporous coating;
• the polymerization or the precipitation and the growth of the molecules of the precursor around the organic assembling groups; and then
• the removal of the organic assembling groups.

6. Process according to Claim 5, in which a nucleation temperature of 90 to 150°C and then a crystal growth temperature of 150 to 190°C are employed in succession.

7. Application of a fibre according to Claim 1, inserted into the mesoporous network of which are transition elements, for the oxidation of olefins.

8. Application of a fibre according to Claim 1, inserted into the mesoporous network of which is Al, in acid catalysis, especially for the cracking of hydrocarbons.

9. Application of a fibre according to Claim 1, included into the mesoporous network of which are Ni, Mo, Pd, Ag, Cu or Fe metal clusters, or clusters of the oxides of these metals, or TiO₂, in catalysis or photocatalysis

10. Application of a fibre according to Claim 1, the surface sites of which are functionalized by thiol groups, in the filtration of heavy metals or the decontamination of effluents consisting of arsenates or the like.

11. Application of a fibre according to Claim 1, in catalysis reactions intended to reduce the amount of unburnt CO and/or the amount of NOₓ and SOₓ, especially in the combustion of propane.

12. Application of a fibre according to Claim 1, to the trapping of dust in a gas.

13. Application of a fibre according to Claim 1, to the treatment of industrial hot gases.

14. Application of a fibre according to Claim 1, to deodorizing in ventilation and heating equipment, clean rooms, passenger compartments of transport vehicles or other enclosures.

15. Use of a fibre according to Claim 1, at high temperature, especially up to 900°C.

## Patentansprüche

1. Mineralfaser, die mit einer mesoporösen Beschichtung versehen ist, deren Porengröße 2 bis 50 nm beträgt und welche im Wesentlichen anorganisch und auf der Basis wenigstens einer Verbindung mindestens eines der Elemente Si, W, Sb, Ti, Zr, Ta, V, B, Pb, Mg, Al, Mn, Co, Ni, Sn, Zn, In, Fe und Mo ist.

2. Faser nach Anspruch 1, die aus Glas oder Siliciumdioxid gebildet ist.

3. Erzeugnis, das Fasern nach Anspruch 1 oder 2 und gegebenenfalls einen organischen Bestandteil wie ein Bindemittel umfasst und ein Flächengewicht von mindestens 10 g/m², insbesondere mindestens 30 g/m², besitzt.

4. Erzeugnis nach Anspruch 3 in Form von einer Matte, einem Vlies, einem Filz, einer Wolle, Kurzfasern, einem insbesondere aufgewickelten Faden oder einem Gewebe.

5. Verfahren zur Bildung einer mesoporösen Beschichtung auf Fasern, um ein Erzeugnis nach Anspruch 3 oder 4 herzustellen, welches:
- In-Berührung-Bringen der Fasern mit einer Zusammensetzung aus verbindenden organischen Gruppen und mindestens einem Vorläufer des die mesoporöse Beschichtung bildenden Materials,
- Polymerisieren oder Ausfällen und Wachstum der Moleküle des Vorläufers um die verbindenden organischen Gruppen herum und anschließend
- Entfernen der verbindenden organischen Gruppen
umfasst.

6. Verfahren nach Anspruch 5, in welchem nacheinander eine Kristallkeimbildungstemperatur von 90 bis 150 °C und anschließend eine Kristallwachstumstemperatur von 150 bis 190 °C angewendet werden.

7. Verwendung einer Faser nach Anspruch 1, in deren mesoporöses Netzwerk Übergangselemente eingebaut sind, für die Oxidation von Olefinen.

8. Verwendung einer Faser nach Anspruch 1, in deren mesoporöses Netzwerk Al eingebaut ist, in der sauren Katalyse, insbesondere für das Cracken von Kohlenwasserstoffen.

9. Verwendung einer Faser nach Anspruch 1, in deren mesoporöses Netzwerk metallische Cluster von Ni, Mo, Pd, Ag, Cu bzw. Fe, deren Oxiden oder von TiO₂ eingebaut sind, in der Katalyse oder Photokatalyse.

10. Verwendung einer Faser nach Anspruch 1, deren Oberflächenstellen mit Thiolgruppen funktionalisiert sind, zur Filtration von Schwermetallen oder Reinigung von Abprodukten aus Arsenaten oder dergleichen.

11. Verwendung einer Faser nach Anspruch 1 in katalysierten Reaktionen, die vorgesehen sind, den Anteil an unverbranntem CO und/oder an NOₓ und SOₓ, insbesondere bei der Verbrennung von Propan, zu senken.

12. Verwendung einer Faser nach Anspruch 1 zur Entfernung von Staub aus einem Gas.

13. Verwendung einer Faser nach Anspruch 1 zur Behandlung eines industriellen Heißgases.

14. Verwendung einer Faser nach Anspruch 1 zur Desodorierung in Lüftungs- und Heizungsanlagen, Reinräumen, Fahrzeuginnenräumen oder anderen Räumen.

15. Verwendung einer Faser nach Anspruch 1 bei hoher Temperatur, insbesondere bis zu 900 °C.
